# EUROPÄISCHE PATENTSCHRIFT

(11) **EP 1 806 287 B1**
(45) Veröffentlichungstag und Bekanntmachung des Hinweises auf die Patenterteilung: **26.10.2011**
(21) Anmeldenummer: 06026852.1
(22) Anmeldetag: 23.12.2006
(51) Int. Cl.: B64D 1/04, B64D 1/10, F42B 19/46

(54) **Vorrichtung und Verfahren für das automatische Abstossen von Waffen von einer Ausziehplattform nach Fallschirm-Extraktion**
Device and Method for automatic detachment of weapons from an extension platform after parachute extraction
Dispositif et Procédé pour repousser de manière automatique des armes à partir de la plateforme d'extraction après extraction du parachute

(30) Priorität: 10.01.2006 DE 102006001189
(43) Veröffentlichungstag der Anmeldung: 11.07.2007
(73) Patentinhaber: LFK-Lenkflugkörpersysteme GmbH, 86529 Schrobenhausen (DE)
(72) Erfinder: Grabmeier, Michael, 83022 Rosenheim (DE)
(74) Vertreter: Hummel, Adam

(56) Entgegenhaltungen:
- DE-A1- 10 337 085
- DE-A1- 10 338 963
- DE-A1- 10 342 565

## Beschreibung

Die Erfindung betrifft eine Vorrichtung, die das automatische Abstoßen von Waffen von einer Ausziehplattform, an deren Unterseite sie angebracht sind, bewirkt, nachdem die Ausziehplattform mittels Fallschirm aus dem Laderaum eines Transportflugzeuges über die hintere abgesenkte Laderampe herausgezogen worden ist. Die Erfindung betrifft weiterhin ein Verfahren zur Abstoßung einer Waffe vom Waffen-Pylon einer Ausziehplattform mit einer Abfolge von Schritten.

### Hintergrund der Erfindung

Die Verwendung von Kampfflugzeugen wie Eurofighter, Tornado, F- 18, Mirage oder Gripen als Abschußplattform für Flugkörper insbesondere Marschflugkörper weist eine Reihe von Nachteilen auf, die in DE 103 38 963 ausführlich dargestellt sind.

Die Benutzung eines militärischen Transportflugzeuges wie A400M als Abschußplattform für Flugkörper und gelenkte Bomben ist daher grundsätzlich hinsichtlich Kosteneinsparung und Nutzungs-Optimierung anstrebenswert, wobei der Anpassungs-Aufwand hinsichtlich Flugkörper und Transportflugzeug ein entscheidendes Kriterium darstellt.

### Stand der Technik

Aus DE 103 38 963 ist eine Plattform bekannt, mit der Flugkörper mittels eines Ausziehfallschirm aus einen Transportflugzeug über die hintere, abgesenkte Laderampe herausgezogen und danach von der Plattform getrennt werden, um dann ihre vorgeplante Mission durchzuführen. Die Trennung des Flugkörpers vom Waffen-Pylon wird in DE 103 38 963 durch den Flugkörper herbeigeführt, indem er das Abstoßungs-System (z.B. pyrotechnisches Gasdrucksystem mit Hacken, Stößel und Abpratzarmen) des Waffen-Pylons der Ausziehplattform mittels einer Zündleitung seines Nabelschnur-Steckers aktiviert. Dazu muss allerdings ein Flugkörper, der für den Verschuß von einem Jagdbomber entwickelt wurde (in diesem Falle initiiert der Jagdbomber die Abstoßung durch Kartuschen-Zündung), hardwaremäßig entsprechend geändert werden. Somit sind im Flugkörper zusätzliche Leitungen und gegebenenfalls Anzündinitiatoren zu integieren und vorhandene sicherheits-kritische Firm- und Software zu modifizieren.

Die DE 103 37 085 A1 welche als nächstliegender, bekannter Stand der Technik betrachtet wird, beschreibt eine Vorrichtung zum Abwurf von Flugkörpern aus einem Transportflugzeug über die abgesenkte hintere Ladeklappe, wobei die Ausziehplattform über einen Mechanismus verfügt, der die Abstoßung eines Flugkörpers vom Pylon erst dann auslöst, wenn das Umbilical-Kabel von der Ausziehplattform während des Ausziehvorgangs abgezogen wird und die Ausziehplattform den Sicherheitsbereich des Transportflugzeugs verlassen hat.

In der DE 103 42 565 A1 ist ebenfalls eine Ausziehplattform dargestellt, die wenigstens einen Sicherheits-Riegel aufweist, der mittels einer Release-Leine herausgezogen wird, wodurch ein elektrisches Signal erzeugt wird, das als Bedingung für eine Kartuschen-Zündung verarbeitet wird, welche die Abtrennung des Flugkörpers vom Airdrop-Pylon bewirkt.

### Technisches Problem

Der vorliegenden Erfindung liegt folgendes technische Problem zugrunde: es sollen Flugkörper oder allgemeiner gelenkte Waffen aus militärischen Transportflugzeugen über die geöffnete, hintere Ladeluke und abgesenkte, hintere Laderampe kostengünstig verschossen werden, wobei keine Hard- oder Firmware-Modifikation der Waffe notwendig sein soll.

Die Anpassung der Software des Flugkörpers an die Bedingungen des Airdrops aus einem Transportflugzeug ist dagegen unvermeidlich, da sich die Ablauf eines Kampfflugzeug-Releases deutlich vom Ablauf eines Airdrops aus einem Transportflugzeug unterscheidet. Da Software problemlos überladbar ist, sind Software-Modifikationen/Erweiterungen tolerierbar.

### Darstellung der Erfindung und Ausführungsbeispiel

Die Lösung des vorher dargestellten, technischen Problems erfolgt durch die Merkmale des Anspruchs 1. Vorteilhafte Ausgestaltung der Erfindung ist in Unter- und Nebenansprüchen dargestellt. Nachfolgend soll die Erfindung anhand eines in den Zeichnungen dargestellten, bevorzugten Ausführungsbeispieles näher erläutert werden. Es zeigt:
- **Fig. 1a :**: eine Ausziehplattform mit angehängter Waffe und eingebunden in die Avionik eines Transportflugzeuges,
- **Fig. 1b :**: eine Ausziehplattform mit zwei angehängten Waffen,
- **Fig. 1c :**: eine Ausziehplattform mit drei angehängten Waffen,
- **Fig. 2 :**: Logik für die Aktivierung der Waffenabstoßung eines Waffen-Pylons,
- **Fig. 3, 4 :**: zeigen den Ausziehvorgang eines Ausziehplattform aus dem Laderaum eines Transportflugzeuges über die hintere, abgesenkte Laderampe,
- **Fig. 5 - 7 :**: zeigen das Abziehen des Umbilical-Kabels vom Umbilical-Kuppler der Ausziehplattform und das Herausziehen des Zünd-Stiftes aus der Ausziehplattform, wodurch die Zündung der Waffen-Pylon-Kartuschen ausgelöst wird.

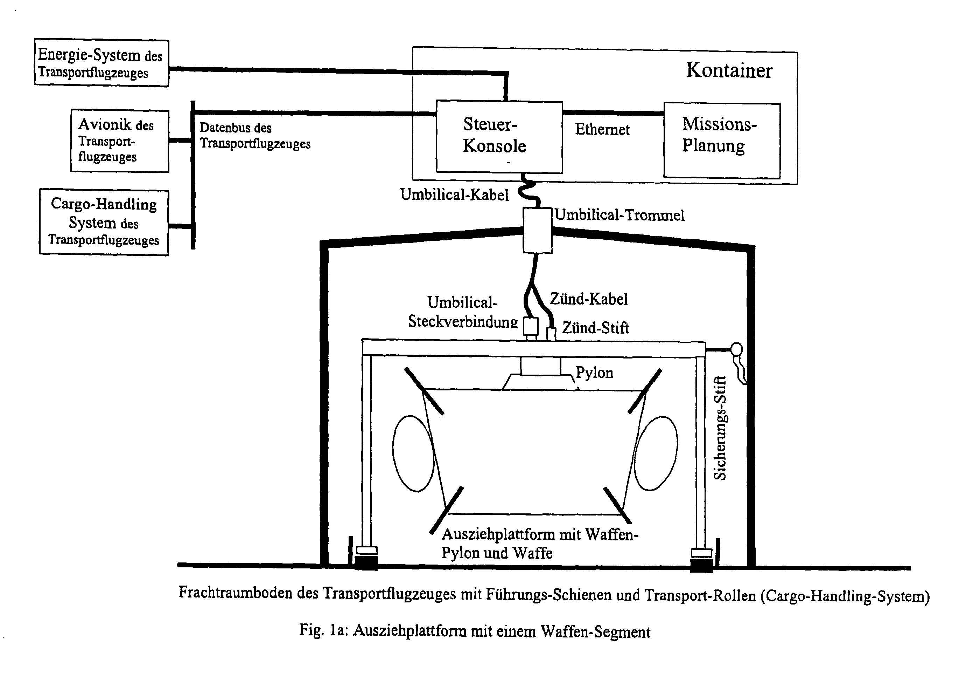

Fig. 1a zeigt eine Ausziehplattform wie sie aus DE 103 38 963 bekannt ist. Die Ausziehplattform kann im Transportflugzeug wie eine Standard-Palette bewegt und befestigt werden und wird mit Hilfe eines Ausziehfallschirmes wie eine Airdrop-Last-Palette über die hintere, abgesenkte Laderampe aus dem Laderaum herausgezogen. An ihrer Unterseite befindet sich ein Waffen-Pylon mit einer pneumatischen oder pyrotechnischen Abstoßvorrichtung, der eine oder mehrere Waffen aufnimmt. Mittels eines Umbilical-Kabels ist die Ausziehplattform mit einer Steuer-Konsole (Waffensteuerung im Transportflugzeug) verbunden. Diskrete und analoge Signal- und Daten-Leitungen dieses Umbilical-Kabels (siehe MIL-STD 1760) sind über die Umbilical-Verbindung Waffen-Pylon - Waffe in die Waffe geführt, wodurch die Kommunikation zwischen Waffe und Steuer-Konsole ermöglicht wird.

Die Länge des Umbilical-Kabels ist so ausgelegt, dass der zugehörige Umbilical-Stecker vom Umbilical-Kuppler der Ausziehplattform erst dann abgezogen wird, wenn die Ausziehplattform das turbulente Luftströmungsfeld hinter der Laderampe verlassen hat und sich außerhalb des definierten Sicherheitsabstandes zum Transportflugzeuges befindet. Ebenso ist die Länge des Zugseiles zwischen Ausziehplattform und Ausziehfallschirm so dimensioniert, dass die Entfaltung des Ausziehfallschirmes nicht im turbulenten Luftströmungsfeld hinter der Laderampe erfolgt, sondern im anschließenden laminaren Strömungsfeld. Um ein geordnetes Ausstrecken des Umbilical-Kabels sicherzustellen, ist das Umbilical-Kabel auf einer Umbilical-Trommel aufgewickelt, welche durch ein Gestell oberhalb der Ausziehplattform positioniert ist. Nachdem der Umbilical- Stecker von der Ausziehplattform während des Airdrops abgezogen wurde, wickelt die Umbilical-Trommel das ausgezogene Umbilical-Kabel wieder selbständig auf, so dass es für den Verschuß der nächsten Ausziehplattform zur Verfügung steht.

Als zusätzliches Merkmal weist die Ausziehplattform einen Zünd-Stift auf, der mittels eines Zünd-Kabels mit dem Umbilical-Kabel verbunden ist. Falls nun während des Airdrops der Ausziehplattform der Umbilical-Stecker des Umbilical-Kabels vom Umbilical-Kuppler der Ausziehplattform abgezogen wird, wird dadurch anschließend der Zünd-Stift ebenso aus der Ausziehplattform herausgezogen.

Als weiteres Sicherheits-Element umfasst die Ausziehplattform einen Sicherungs-Stift, der durch den Lademeister des Transportflugzeuges vor dem Airdrop herausgezogen wird, um die Abstoßvorrichtung der Ausziehplattform zu entsichern.

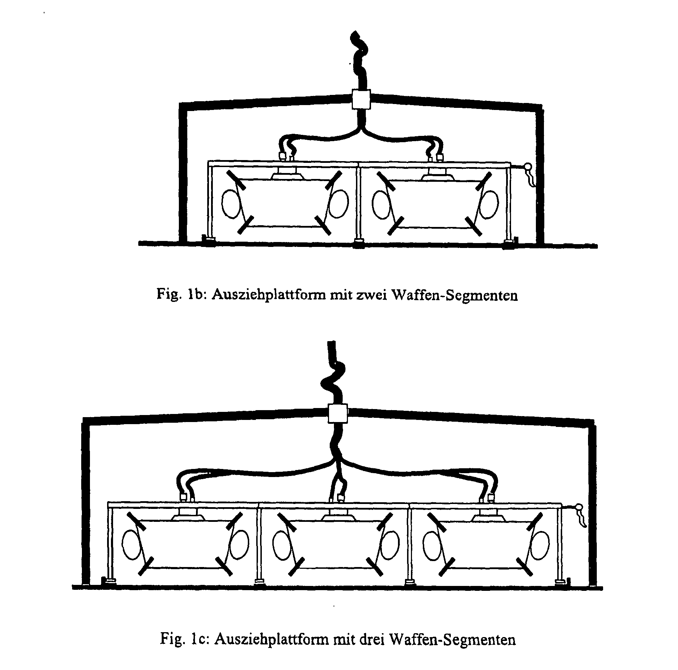

Fig. 1b und 1c zeigen eine Ausziehplattform mit zwei bzw. drei angehängten Waffen. Dabei wird der segmentmäßige Aufbau der Ausziehplattform deutlich. Jedes Waffen-Segment verfügt über einen Waffen-Pylon zur Aufnahme einer Waffe. Jeder Waffen-Pylon kodiert eine andere Milbus-RTU-Adresse (siehe MIL-STD 1760), so dass jede Waffe einer Ausziehplattform von der Steuer-Konsole eindeutig ansprechbar ist. Die Länge des jeweiligen Umbilical-Kabels zum Waffen-Segment definiert den Zeitpunkt der Zündung der Waffen-Pylon-Kartuschen. So werden in Fig. 1b beide Waffen gleichzeitig abgestoßen, in Fig. 1c wird zunächst die mittlere Waffe abgestoßen und danach die beiden äußeren zum gleichen Zeitpunkt.

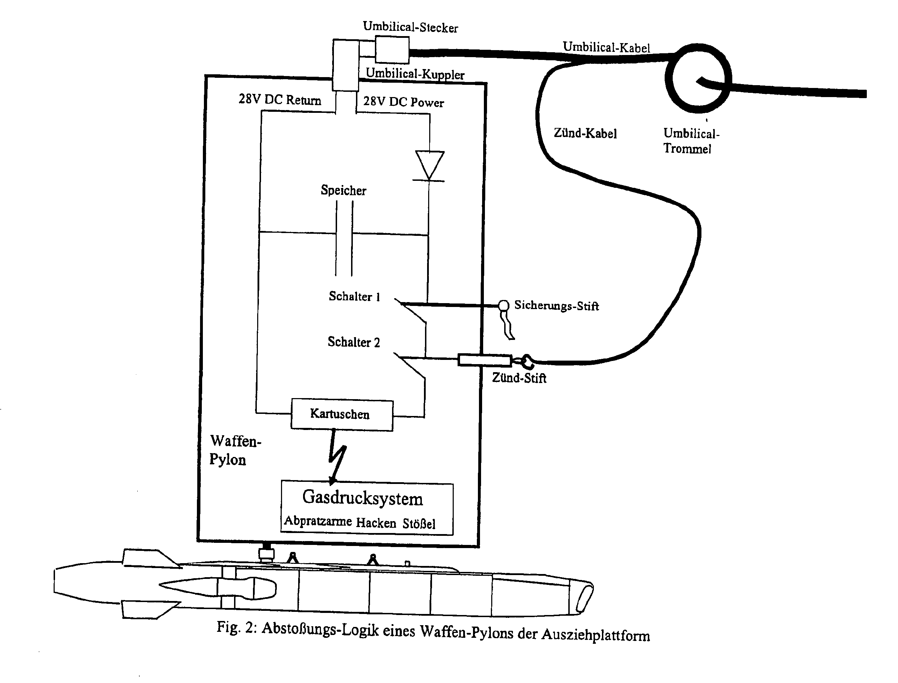

In Fig. 2 ist der Mechanismus eines Waffen-Pylons der Ausziehplattform dargestellt, der die automatische Abstoßung einer Waffe vom Waffen-Pylon bewirkt. Wenn im Rahmen der Release-Sequenz der Waffe von der Steuer-Konsole via Umbilical-Kabel die Zünd-Versorgung 28V DC Power aktiviert wird (z.B. zum Zünden der Thermal-Batterie), wird dadurch ein kapazitiver Speicher mit elektrischer Energie aufgeladen. Falls nun der Umbilical-Stecker während des Airdrops der Ausziehplattform vom Umbilical-Kuppler abgezogen wird, liegt keine Ladespannung mehr an. Eine Entladung in Richtung des Umbilical-Kabels bzw. in Richtung der Waffe wird durch eine entsprechende Sperr-Diodenschaltung verhindert.

Wenn nun der Sicherungs-Stift und der Zünd- Stift herausgezogen sind, sind die Schalter 1 und 2 geschlossen, wodurch sich die gespeicherte, elektrische Energie entladen kann. Der dabei auftretende Entlade-Strom wirkt als Impuls zur Zündung der Kartuschen des Waffen-Pylons. Der daraufhin erzeugte Gasdruck bewirkt dann die Abstoßung der Waffe vom Pylon. Daher ist die Abstoßung einer Waffe vom Waffen-Pylon nur möglich, wenn folgende Kriterien alle erfüllt:
- die Kartuschen des Waffen-Pylons müssen eingeschraubt sein,
- der Sicherungs-Stift der Ausziehplattform muss abgezogen sein,
- die Steuer-Konsole muss die Release-Sequenz der Waffe aktiviert haben, so dass der kapazitive Speicher der Ausziehplattform durch 28V Gleichspannung mit Zündenergie aufgeladen wird,
- die Ausziehplattform muss aus dem Laderaum des Transportflugzeuges herausgezogen worden sein und den Sicherheitsbereich des Transportflugzeuges hinter der Laderampe verlassen haben, so dass das Zünd-Kabel durch das gespannte Umbilical-Kabel den Zünd- Stift aus der Ausziehplattform abzieht, wodurch die Kartuschen-Zündung ausgelöst wird.

Somit sind hinreichende Sicherungs-Elemente vorhanden, um die unbeabsichtigte Abstoßung der Waffe von der Ausziehplattform zu verhindern.

Falls eine Release-Sequenz abgebrochen werden muss (z.B. aufgrund eines Defektes der Waffe) und der kapazitive Speicher bereits aufgeladen ist, wird der Umbilical-Stecker entfernt und ein spezieller Kurzschluß-Stecker auf den Umbilical-Kuppler der Ausziehplattform aufgebracht, wodurch sich die gespeicherte Energie dann entladen kann.

Falls die Abstoßung der Waffe vom Pylon nicht funktioniert (z.B. defekte Kartuschen, Zünd- oder Sicherungs-Stift nicht abgezogen) bleibt die Waffe in einem sicheren Zustand, weil der Plunger der Waffe (Marschflugkörper) nicht ausfahren kann und damit die waffen-interne Sicherheits-Kette (Schärfung des Gefechtskopfes) nicht freigeschaltet wird. Dasselbe gilt für Reißleinen-Sicherungen (lanyard) von gelenkten Bomben wie JDAM. Waffe und Ausziehplattform schweben dann am Ausziehfallschirm hängend zu Boden.

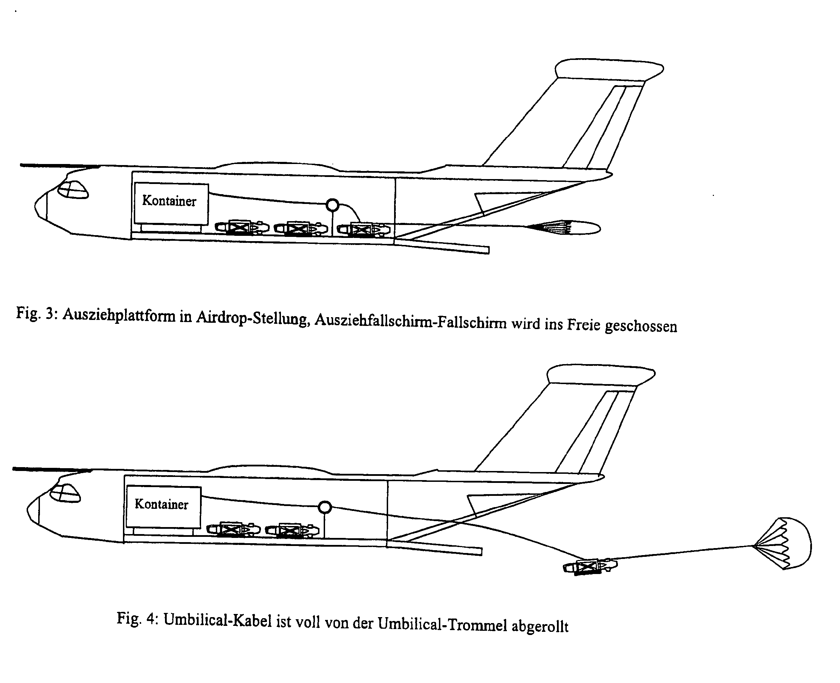

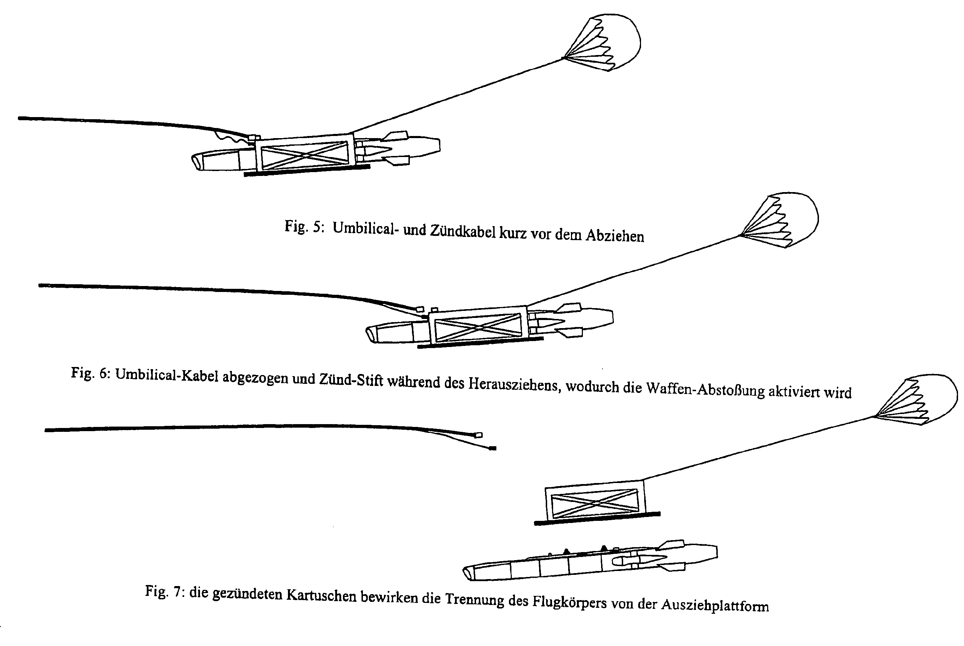

Fig. 3 - 7 zeigen den Ablauf des Airdrops einer Ausziehplattform mit einem Waffen-Segment samt anschließender Trennung der Waffe von der Ausziehplattform. Dies erfolgt in folgenden Schritten:
a. am Boden werden die Waffen an die Ausziehplattformen angebracht, in der selben Weise wie bei Kampfflugzeugen an die entsprechenden Waffenstationen (mechanisches Einrasten der Waffen-Ösen in die Pylon-Hacken, Abspreizen der Abpratzarme, Herstellen der Umbilical-Verbindung zwischen Waffen-Pylon und Waffe); zudem wird kontrolliert, ob die Sicherungs-Stifte sowie die Zünd-Stifte in die Ausziehplattformen eingesteckt und keine Kartuschen in die Waffen-Pylone eingeschraubt sind,
b. jede Ausziehplattform wird nacheinander mit dem Kontainer (Steuer-Konsole und Missions-Planung) mittels Umbilical-Kabel verbunden, wodurch die angehängte Waffe getestet und mit dem zugehörigen Missions-Plan beladen werden kann,
c. der Container, die erfolgreich getesteten Ausziehplattformen und das Umbilical-Trommel-Gestell werden in den Laderaum des Transportflugzeuges verbracht und dort gesichert; der Container wird mit den Systemen des Transportflugzeuges verbunden und die Funktionsfähigkeit überprüft; ebenso wird der Container mit dem Umbilical-Trommel-Gestell mittels Umbilical-Kabel verbunden,
d. das Transportflugzeuges startet und fliegt in das vorgeplante Release-Gebiet der Waffen,
e. bei Annäherung an die vorgeplante Airdrop-Position wird die Ausziehplattform, welche am nächsten zur Laderampe ist, mit der Steuer-Konsole durch das Umbilical-Kabel, welches von der Umbilical-Trommel abgezogen wird, verbunden; das zugehörige Zünd-Kabel wird in den Zünd-Stift des Waffen-Pylons eingeklickt,
f. die Waffe wird mit Energie und Informationen versorgt, führt ihren Selbsttest durch; falls in Schritt b. noch nicht erfolgt, wird der Missions-Plan in die Waffe geladen, danach meldet die Waffe ihre Funktionsbereitschaft der Steuer-Konsole; gegebenenfalls wird der Missions-Plan im Transportflugzeug erst erzeugt bzw. modifiziert,
g. danach erfolgt die Aktivierung, Durchführung und Überwachung der Aufrichtung des Navigations-Systemes der Waffe durch die Steuer-Konsole sowie gegebenenfalls die Auswahl der Mission,
h. die Kartuschen werden in den Waffen-Pylon eingeschraubt, der Sicherungs-Stift der Ausziehplattform wird abgezogen, wodurch die Abstoßvorrichtung des Waffen-Pylons entsichert wird,
i. die Laderampe des Transportflugzeuges wird abgesenkt und die hintere Ladeluke soweit nötig geöffnet wird, so dass sich nun die Ausziehplattform in Airdrop-Stellung befindet,
j. mittels der Steuer-Konsole werden die irreversiblen Release-Vorbereitungen der Waffe (z.B. Start der Thermal-Batterie, Entriegelung der Rudermaschinen, Einstellung der Fin-Preset-Winkel, Plunger-Entriegelung) aktiviert, wodurch der kapazitive Speicher des Waffen-Pylons mit elektrischer Energie durch die anliegende 28V Gleichspannung aufgeladen wird,
k. danach wird mittels der Steuer-Konsole geprüft, ob die Waffe den erfolgreichen Abschluß der irreversiblen Release-Vorbereitungen via Milbus gemeldet hat,
l. falls dies der Fall ist, wird der Ausziehfallschirmes, der mit der Ausziehplattform verbunden ist, aus der abgesenkten Laderampe des Transportflugzeuges ausgeworfen, wobei dies der Waffe mittels Milbus angekündigt wird,
m. durch die Zugkraft des entfalteten Ausziehfallschirmes wird die Ausziehplattform samt angehängter Waffe über die abgesenkte Laderampe des Transportflugzeuges ins Freie gezogen,
n. die Waffe erkennt den Ausziehvorganges, indem die Waffe die durch den Ausziehvorgang auftretenden Beschleunigungen mittels ihres Navigations-Systems sensiert und hinsichtlich der Relativ-Bewegung zwischen Transportflugzeug und Waffe auf Plausibilität auswertet,
o. wenn das Umbilical-Kabel voll von der Umbilical-Trommel des Gestelles abgerollt ist, wird zunächst der Umbilcial-Stecker des Umbilical-Kabels vom Umbilical-Kuppler der Ausziehplattform abgezogen, was die Waffe durch das Aussetzen des Milbus-Verkehrs registiert; kurz danach wird der Zünd- Stift aus der Ausziehplattform herausgezogen (durch die Länge des Zünd-Kabels verursacht), was die Zündung der Waffen-Pylon-Kartuschen durch die Entladung des kapazitiven Speichers nach sich zieht,
p. durch den entstehenden Gasdruck werden die Pylon-Hacken geöffnet, die Pylon-Abpratzarme werden seitlich hochgeklappt und die Pylon-Stößel stoßen die Ausziehplattform von der Waffe weg, wodurch der Plunger der Waffe ausfahren kann,
q. die Waffe sensiert den ausgefahrenen Plunger, wodurch sie Kenntnisse von der Abstoßung erhält,
r. die Waffe führt dann die ab diesem Zeitpunkt bei einem Kampfflugzeug-Release üblichen Aktionen wie z.B. Abgangs-Lenkung, Öffnen der Triebwerkseinläufe, Ausklappen der Schwenkflügel etc. durch. Falls mehrere Waffen an der Ausziehplattform angehängt sind, führt jede Waffe nach erkannter Abstoßung von der Ausziehplattform die seinem Waffen-Pylon und damit seiner Position an der Ausziehplattform zugeordnete Abgangs-Lenkung durchführt, wodurch eine Kollision der Waffen während der Abgangs-Phase verhindert wird.

## Patentansprüche

1. Ausziehplattform für das Absetzen von Waffen aus militärischen Transportflugzeugen über die abgesenkte, hintere Laderampe mittels Ausziehfall-Fallschirm wobei
- mindestens ein Waffen-Pylon an der Unterseite der Ausziehplattform zur Aufnahme von Waffen montiert ist,
- die Ausziehplattform bis zum Verlassen des Sicherheitsabstandes zum Transportflugzeug über ein abziehbares Umbilical-Kabel, dessen Länge dem Sicherheitsabstand entspricht, mit einer im Transportflugzeug verbleibenden Waffensteuerung verbunden ist,
- die Ausziehplattform über einen Mechanismus verfügt, der die Abstoßung der angehängten Waffe vom Waffen-Pylon bzw. der angehängten Waffen von den Waffen-Pylonen erst dann auslöst, wenn das Umbilical-Kabel von der Ausziehplattform während des Ausziehvorganges abgezogen wird und damit die Ausziehplattform den.Sicherheitsbereich des Transportflugzeuges verlassen hat,
- die Ausziehplattform über einen Sicherungs-Stift verfügt, nach dessen Entfernung von der Ausziehplattform die Auslösung der Abstoßung der Waffe vom Waffen-Pylon bzw. der Waffen von den Waffen-Pylonen nicht mehr blockiert ist,
- jeder Waffen-Pylon der Ausziehplattform über einen Zünd-Stift verfügt, der, falls er durch Zünd- und Umbilical-Kabel aus dem Waffen-Pylon herausgezogen wird, die Auslösung der Abstoßung der Waffe vom Waffen-Pylon initiiert,
wobei die Ausziehplattform für jede angehängte Waffe über einen Speicher verfügt, mit dem die Energie, die zur Auslösung des Abstoßvorganges der Waffe benötigt wird, zwischengespeichert wird.

2. Verfahren zur Abstoßung einer Waffe vom Waffen-Pylon einer Ausziehplattform nach Anspruch 1 mit den Schritten :
a. Anbringen des Umbilical-Kabels an die Ausziehplattform und Fixierung des Zünd-Kabels am Zünd-Stift des Waffen-Pylons der Ausziehplattform,
b. Einbau der Kartuschen in den Waffen-Pylon der Ausziehplattform und Entfernen des Sicherungs-Stiftes von der Ausziehplattform,
c. Aufladung des Speichers der Ausziehplattform mit elektrischer Energie, welche von der Waffensteuerung während der Release-Sequenz der Waffe geliefert wird,
d. Abziehen des Umbilical-Kabels von der Ausziehplattform während des Ausziehvorganges der Ausziehplattform,
e. Abziehen des Zünd-Kabels und Herausziehen des Zünd-Stiftes aus dem Waffen-Pylon,
f. elektrische Entladung der Speichers der Ausziehplattform und Erzeugung des Impulses zur Aktivierung der Waffen-Abstoßung.

## Claims

1. Extraction platform for releasing weapons from military transport aircraft via the lowered, rear loading ramp by means of an extraction parachute, wherein
- at least one weapon pylon is mounted on the underneath of the extraction platform for holding weapons,
- the extraction platform is connected to a weapon controller, which remains in the transport aircraft, via an umbilical cable which can be pulled off and whose length corresponds to the safe-separation distance, until the safe-separation distance is reached,
- the extraction platform has a mechanism which initiates the ejection of the attached weapon from the weapon pylon, or the attached weapons from the weapon pylons, only when the umbilical cable is pulled off the extraction platform during the extraction process, and the extraction platform has therefore left the safety area of the transport aircraft,
- the extraction platform has a safety pin, after whose removal from the extraction platform, the initiation of the ejection of the weapon from the weapon pylon or of the weapons from the weapon pylons is no longer blocked,
- each weapon pylon on the extraction platform has a firing pin which initiates the ejection of the weapon from the weapon pylon if it is pulled out of the weapon pylon by the firing and umbilical cables, wherein
the extraction platform has a store for each attached weapon, by means of which the energy which is required to initiate the ejection process for the weapon is temporarily installed.

2. Method for ejection of a weapon from the weapon pylon of an extraction platform according to Claim 1, having the following steps:
a. the umbilical cable is fitted to the extraction platform and the firing cable is fixed to the firing pin of the weapon pylon on the extraction platform,
b. the cartridges are fitted in the weapon pylon of the extraction platform, and the safety pin is removed from the extraction platform,
c. the store for the extraction platform is charged with electrical energy, which is provided from the weapon controller during the release sequence of the weapon,
d. the umbilical cable is pulled off the extraction platform during the extraction process of the extraction platform,
e. the firing cable is pulled off and the firing pin is pulled out of the weapon pylon,
f. the store for the extraction platform is electrically discharged, and the pulse for activation of the weapon ejection is produced.

## Revendications

1. Plate-forme extractible pour déposer des armes depuis des aéronefs de transport militaires par le biais de la rampe de chargement arrière abaissée au moyen d'un parachute auxiliaire, dans laquelle
- au moins un pylône à armes est monté sur le côté inférieur de la plate-forme extractible pour accueillir des armes,
- la plate-forme extractible, jusqu'à sa sortie de la distance de sécurité par rapport à l'aéronef de transport, est reliée par le biais d'un cordon ombilical détachable, dont la longueur correspond à la distance de sécurité, avec une commande d'arme qui demeure dans l'aéronef de transport,
- la plate-forme extractible dispose d'un mécanisme qui ne déclenche la répulsion de l'arme accrochée du pylône à armes ou des armes accrochées des pylônes à armes que lorsque le cordon ombilical est détaché de la plate-forme extractible pendant l'opération d'extraction et que la plate-forme extractible a ainsi quitté la zone de sécurité de l'aéronef de transport,
- la plate-forme extractible dispose d'une goupille de sécurité après le retrait de laquelle de la plate-forme extractible le déclenchement de la répulsion de l'arme du pylône à armes ou des armes des pylônes à armes n'est plus bloqué,
- chaque pylône à armes de la plate-forme extractible dispose d'une goupille d'amorçage qui, dans le cas où elle est sortie hors du pylône à armes par le cordon d'amorçage et ombilical, initie le déclenchement de la répulsion de l'arme du pylône à armes, la plate-forme extractible disposant pour chaque arme accrochée d'un accumulateur avec lequel est stockée temporairement l'énergie nécessaire pour déclencher le processus de répulsion de l'arme.

2. Procédé de répulsion d'une arme d'un pylône à armes d'une plate-forme extractible selon la revendication 1, comprenant les étapes suivantes :
a. Montage du cordon ombilical sur la plate-forme extractible et fixation du câble d'amorçage à la goupille d'amorçage du pylône à armes de la plate-forme extractible,
b. Intégration des cartouches dans le pylône à armes de la plate-forme extractible et enlèvement de la goupille de sécurité de la plate-forme extractible,
c. Charge de l'accumulateur de la plate-forme extractible avec de l'énergie électrique, laquelle est délivrée par la commande d'arme pendant la séquence de libération de l'arme,
d. Retrait du cordon ombilical de la plate-forme extractible pendant l'opération d'extraction de la plate-forme extractible,
e. Retrait du câble d'amorçage et extraction de la goupille d'amorçage hors du pylône à armes,
f. Décharge électrique de l'accumulateur de la plate-forme extractible et génération de l'impulsion pour activer la répulsion de l'arme.
